# EUROPEAN PATENT APPLICATION

(11) **EP 4 411 241 A1**
(43) Date of publication of application: **07.08.2024**
(21) Application number: 24155523.4
(22) Date of filing: 02.02.2024
(51) Int. Cl.: F23R 3/28, F23R 3/34

(54) **FUEL SYSTEM WITH PILOT AND MAIN INJECTORS FOR HYDROGEN-DRIVEN GAS TURBINE ENGINE**

(30) Priority: 02.02.2023 US 202363482850 P
(71) Applicant: PRATT & WHITNEY CANADA CORP., Longueuil, Québec J4G 1A1 (CA)
(72) Inventor: HU, Tin Cheung John, (01BE5) Longueuil, J4G 1A1 (CA)
(74) Representative: Dehns

(57) **Abstract**

A gas turbine engine (20) includes a combustion chamber (40), pilot injectors (42), and first and second main injectors (44, 46). The combustion chamber (40) is disposed about an axis (A2) and has first and second axial ends (40a, 40b) and radially inner and outer walls (40c, 40d). The pilot injectors (42) are at the first axial end (40a, 40b) for introducing a first percentage of a hydrogen and gas mixture into the combustion chamber (40). Each of the pilot injectors (42) has a pilot hydrogen feed passage (50a) that includes an open-cell metallic foam (52) disposed therein. The first and second main injectors (44, 46) are at, respectively, the radially inner and outer walls (40c, 40d) for introducing a second percentage of a hydrogen and gas mixture into the combustion chamber (40).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Present gas turbine engines use liquid hydrocarbon fuels (LHF). LHF is provided through a fuel supply system and introduced into the combustor by liquid injectors. The fuel supply system and liquid injectors are designed for handling and efficient burning of the LHF. For instance, as liquid is much denser than the air (gas) it is to be mixed with, it is necessary for the liquid injectors to atomize the LHF into tiny droplets in order to facilitate more uniform burning. More recently it has been proposed to utilize hydrogen (H₂) as a fuel.

### SUMMARY

A gas turbine engine according to an example of the present disclosure includes a combustion chamber, pilot injectors, and first and second main injectors. The combustion chamber is disposed about an axis and has first and second axial ends and radially inner and outer walls. The pilot injectors are at the first axial end for introducing a first percentage of a hydrogen and gas mixture into the combustion chamber. Each of the pilot injectors has a pilot hydrogen feed passage that includes an open-cell metallic foam disposed therein. The first and second main injectors are at, respectively, the radially inner and outer walls for introducing a second percentage of a hydrogen and gas mixture into the combustion chamber.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates the annular combustor section of the engine.

In this disclosure, like reference numerals designate like elements where appropriate and reference numerals with the addition of one-hundred or multiples thereof designate modified elements that are understood to incorporate the same features and benefits of the corresponding elements.

### DETAILED DESCRIPTION

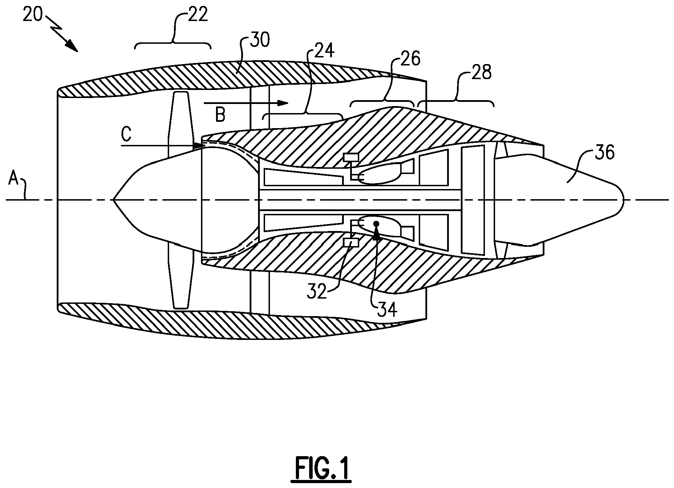

Figure 1 schematically illustrates a gas turbine engine 20. The example gas turbine engine 20 is a turbofan that generally incorporates a fan section 22, a compressor section 24, a combustor section 26, and a turbine section 28. The fan section 22 drives air along a bypass flow path B in a bypass duct defined within a nacelle 30. The turbine engine 20 intakes air along a core flow path C into the compressor section 24 for compression and communication into the combustor section 26. In the combustor section 26, the compressed air or other combustion gas is mixed with fuel from a fuel system 32 and ignited by igniter 34 to generate an exhaust gas flow that expands through the turbine section 28 and is exhausted through exhaust nozzle 36. Although depicted as a turbofan turbine engine in the disclosed non-limiting embodiment, it should be understood that the concepts described herein are not limited to use with turbofans as the teachings may be applied to other types of turbine engines. As one example, rather than having the propulsor be an enclosed fan, the propulsor may be an open propeller.

While present gas turbine engines use liquid hydrocarbon fuels (LHF), the engine 20 of the present disclosure is designed to use gaseous fuel, such as hydrogen, in the fuel system 32. In this regard, the fuel system 32 may carry liquid cryogenic hydrogen or gaseous hydrogen, both of which are provided to the combustor section 26 as gaseous hydrogen. A challenge to using hydrogen is that because it is a gas, its handling and combustion properties differ from that of LHF. For instance, hydrogen does not require atomization like a liquid, and hydrogen has higher flammability and different flame characteristics than LHF. Accordingly, injector nozzles and combustors that are designed for hydrogen are needed. In these regards, the engine 20 includes a combustion system 38 that is configured for introducing the hydrogen fuel into the combustor section 26.

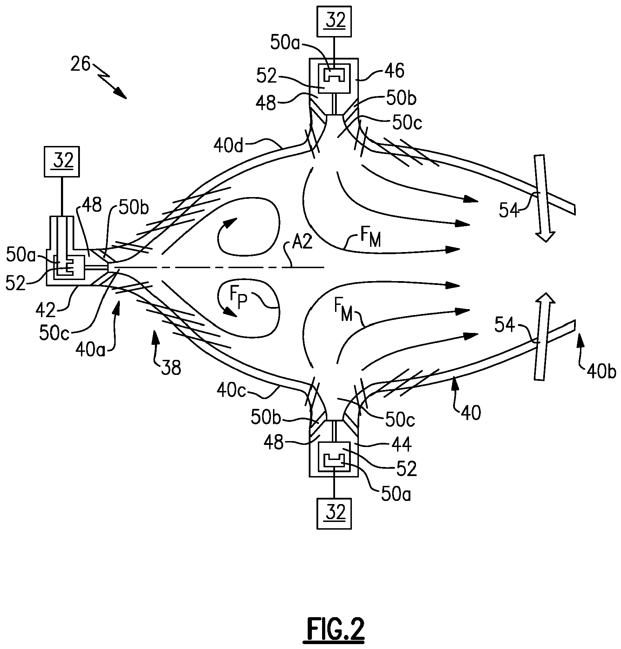

Figure 2 shows a sectioned view of the combustion system 38 taken along a radial plane that includes the engine axis A. The combustion system 38 includes a combustion chamber 40 in the combustor section 26 for introducing hydrogen and combustion gas (e.g., air in the examples herein). The combustion chamber 40 is annularly disposed about the engine axis. In the illustrated sectioned view, the combustion chamber 40 is disposed about an axis A2 that is generally parallel to the engine axis A. The combustion chamber 40 has first and second axial ends 40a/40b and radially inner and outer walls 40c/40d. Radially "inner" and "outer" indicate radial proximity to the engine axis A. There is a plurality of circumferentially distributed pilot injectors 42 (one shown) at the first axial end 40a for introducing a first percentage of a hydrogen and air mixture into the combustion chamber 40. Additional pilot injector 42 are located at circumferential intervals around the combustion chamber 40. There is also a plurality of first and second main injectors 44/46 at, respectively, the radially inner and outer walls 40c/40d for introducing a second percentage of a hydrogen and air mixture into the combustion chamber 40. Additional main injectors 44/46 are located at circumferential intervals around the combustion chamber 40.

Each of the injectors 42/44/46 includes an injector body 48 that has a hydrogen feed conduit 50a that is connected with the fuel system 32 (hydrogen source), and air feed conduits 50b that are connected with a gas source, such as air from the compressor section 24. A "conduit" as used herein is defined by one or more structures that together convey a fluid from one point to another. For example, a conduit conveying fluid from point A to point B may include one of, or a combination of: a tube, an aperture defined through a part of an engine, a filter, a pump, and so on, depending on the application and context as would be understood by a person of ordinary skill in the art reading the present disclosure.

The air feed passages 50b may be angled radially and axially, such as relative to axis A2 and central axes of feed conduits 50a, to provide a swirling air flow into a mixing region 50c, where the air and hydrogen mix. Each hydrogen feed conduit 50a includes an open-cell metallic foam 52 disposed therein. The foam 52 serves as a flame arrestor, allowing feed flow of hydrogen but facilitating the prevention of flame propagation back through the injector 42/44/46. For instance, the open-cell metallic foam 52 is formed of an alloy that has low susceptibility to hydrogen embrittlement, such as but not limited to, stainless steel or nickel alloy, and which is corrosion resistant and temperature resistant at the expected operating conditions.

The pilot injector 42 is axially-oriented to jet the hydrogen and air mixture in an axial direction (relative to axis A2), and main injectors 44/46 are radially-oriented to jet the hydrogen and air mixture in a radial direction. The main injectors 44/46 are located axially downstream from the pilot injector 42 and in this example are axially equidistant from the pilot injector 42. The main injectors 44/46 are also circumferentially aligned to be across from each other. The hydrogen and air mixture provided from the pilot injectors 42 may be injected tangentially into the combustion chamber 40 to provide a tangential flow (Fp) in the combustion chamber 40 about the engine axis A. The main injectors 44/46 also inject a hydrogen and air mixture along their central axes, though the ratio of hydrogen and air may be different than the ratio of hydrogen and air provided from the pilot injectors 42. The main injectors 44/46 also inject the mixture with a swirling flow (Fm), which may be counter-directional to the flow (Fp) from the pilot injectors 42, i.e., clockwise and counter-clockwise. For example, the pilot injectors 42 can provide a richer fuel-air ratio at low power during starting, and during deceleration. By providing a richer fuel-air ratio, the flame will be more stable and avoid any chance of lean blow-out. The main injectors 44/46 can provide a leaner fuel-air ratio to keep the bulk fuel-air ratio as close to the overall ratio, hence lowering the NOx level down.

In general, the pilot injectors 42 are used for engine starting, flame stability, and power level controls. In these regards, the percentage of the hydrogen and air mixture provided by the pilot injectors 42 versus the percentage provided by the main injectors 44/46 may be adjusted based on engine performance. The stoichiometric ratios of the hydrogen and air in the mixtures provided by the pilot injectors 42 and the main injectors 44/46 may also be adjusted for further control over engine performance. For example, an engine controller may control the percentage and ratios in accordance with a control schedule, such as a lookup table. The fuel system 32 may include valves, flow meters, and other known flow control devices that are configured to be operated by the controller in response to the control schedule to control flow of hydrogen and air. The combustion system 38 may further include a plurality of trimming or dilution jets 54 axially downstream from the main injectors 44/46 for further controlling stability and radial flame profile. The combustion chamber 40 may also include cooling jets both forward and aft of the main injectors 44/46 for cooling the walls of the chamber 40.

This disclosure may be further understood in view of the following examples. A turbine engine 20 according to an example of the present disclosure includes a combustion chamber 40 disposed about an axis A2 and having first and second axial ends 40a/40b and radially inner and outer walls 40c/40d. The is a plurality of pilot injectors 42 at the first axial end 40a for introducing a first percentage of a hydrogen and gas mixture into the combustion chamber 40. Each of the pilot injectors 42 has a pilot hydrogen feed conduit 50a including an open-cell metallic foam 52 disposed therein. There is a plurality of first and second main injectors 44/46 at, respectively, the radially inner and outer walls 40c/40d for introducing a second percentage of a hydrogen and gas mixture into the combustion chamber 40.

In a further example of the foregoing example, each of the first and second main injectors 44/46 includes a main hydrogen feed conduit 50a having an open-cell metallic foam 52 disposed therein.

In a further example of any of the foregoing examples, the first and second main injectors 44/46 are radially-oriented and the pilot injectors 42 are axially-oriented.

In a further example of any of the foregoing examples, the first and second main injectors 44/46 are axially downstream from the pilot injector 42.

In a further example of any of the foregoing examples, the first and second main injectors 44/46 are axially equidistant from the pilot injector 42.

In a further example of any of the foregoing examples, the first and second main injectors 44/46 are circumferentially aligned.

A further example of any of the foregoing examples further includes a plurality of dilution jets 54 axially downstream from the first and second main injectors 44/46.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine (20) comprising:
a combustion chamber (40) disposed about an axis (A2) and having first and second axial ends (40a, 40b) and radially inner and outer walls (40c, 40d);
a plurality of pilot injectors (42) at the first axial end (40a) for introducing a first percentage of a hydrogen and gas mixture into the combustion chamber (40), each of the pilot injectors (42) having a pilot hydrogen feed conduit (50a) including an open-cell metallic foam (52) disposed therein; and
a plurality of first and second main injectors (44, 46) at, respectively, the radially inner and outer walls (40c, 40d) for introducing a second percentage of a hydrogen and gas mixture into the combustion chamber (40).

2. The gas turbine engine (20) as recited in claim 1, wherein each of the first and second main injectors (44, 46) includes a main hydrogen feed conduit (50a) having an open-cell metallic foam (52) disposed therein.

3. The gas turbine engine (20) as recited in claim 1 or 2, wherein the first and second main injectors (44, 46) are radially-oriented and the pilot injectors (42) are axially-oriented.

4. The gas turbine engine (20) as recited in claim 1, 2 or 3, wherein the first and second main injectors (44, 46) are axially downstream from the pilot injector (42).

5. The gas turbine engine (20) as recited in any preceding claim, wherein the first and second main injectors (44, 46) are axially equidistant from the pilot injector (42).

6. The gas turbine engine (20) as recited in any preceding claim, wherein the first and second main injectors (44, 46) are circumferentially aligned.

7. The gas turbine engine (20) as recited in any preceding claim, further comprising a plurality of trimming or dilution jets (54) axially downstream from the first and second main injectors (44, 46).

8. The gas turbine engine (20) of any preceding claim, comprising:
a combustor section (26) having the combustion chamber (40); and
a hydrogen source (32), the plurality of pilot injectors (42) connected with the hydrogen source (32), and the plurality of first and second main injectors (44) connected with the hydrogen source (32).
